# FASCICULE DE BREVET EUROPEEN

(11) **EP 2 794 199 B1**
(45) Date de publication et mention de la délivrance du brevet: **16.12.2015**
(21) Numéro de dépôt: 12810273.8
(22) Date de dépôt: 20.12.2012
(51) Int. Cl.: B25J 21/02

(54) **INSTALLATION COMPORTANT UNE BOITE A GANTS ET UN DISPOSITIF DE CHANGEMENT DE GANT INTEGRANT UN SUIVI DU CHANGEMENT DES GANTS**
EINRICHTUNG MIT EINEM HANDSCHUHFACH UND HANDSCHUHWECHSELVORRICHTUNG MIT ÜBERWACHUNG DES HANDSCHUHWECHSELS
INSTALLATION COMPRISING A GLOVE BOX AND A GLOVE CHANGE DEVICE INCORPORATING MONITORING OF THE GLOVE CHANGE

(30) Priorité: 23.12.2011 FR 1162374
(43) Date de publication de la demande: 29.10.2014
(73) Titulaire: Getinge La Calhene, 41100 Vendôme (FR)
(72) Inventeur: FOURNIER, Bruno, F-41100 Saint Ouen (FR)
(74) Mandataire: Brevalex
(86) Numéro de dépôt international: PCT/EP2012/076427
(87) Numéro de publication internationale: WO 2013/092882

(56) Documents cités:
- DE-A1-102006 043 686
- FR-A1- 2 652 143
- FR-A1- 2 864 235
- FR-A1- 2 951 516

## Description

### DOMAINE TECHNIQUE ET ART ANTÉRIEUR

La présente invention se rapporte à une installation comportant une boite à gants, un dispositif de changement de gant ou d'objets fixés sur la boîte à gants, dans laquelle la traçabilité desdits objets est améliorée.

La manipulation de produits toxiques s'effectue à l'intérieur de boîtes à gants ou d'isolateurs, auquel on accède au moyen de gants étanches fixés sur une paroi de la boîte à gant ou de l'isolateur pour assurer la protection de l'opérateur au moyen de gants étanches.

L'extrémité ouverte d'un gant par laquelle l'opérateur insère la main est montée sur une bague rigide, sur laquelle est monté un joint d'étanchéité.

Cet ensemble composé du gant de la bague et du joint forme un produit à usage unique, destiné à être utilisé sur une boîte à gant ou un isolateur, pour des applications telles que la manipulation de produits radioactifs dans l'industrie nucléaire ou de produits toxiques dans l'industrie pharmaceutique.

Cet ensemble se connecte à la boîte à gant ou à l'isolateur par l'intermédiaire d'une bague d'enceinte préalablement fixée de façon étanche sur la paroi de l'enceinte. La bague d'enceinte délimite donc une ouverture dans la paroi, qui est fermée de manière étanche par l'ensemble gant, bague et joint.

Lors d'un changement de gant, il convient d'assurer la continuité du confinement, c'est-à-dire de la protection de l'opérateur. Pour cela, un outillage appelé «canon d'éjection» permet de remplacer un gant usagé par un gant neuf sans rupture de confinement.

Un tel dispositif de changement de gant est par exemple divulgué dans la demande de brevet FR 2 652 143 A1.

Les gants ont une date de péremption, au-delà de laquelle il n'est plus possible de garantir leurs caractéristiques d'étanchéité. Etant donné le caractère critique d'une éventuelle rupture de confinement du fait de la dangerosité des produits manipulés, un gant doit être remplacé avant sa date de péremption. Un suivi de cette date de péremption est donc requis.

Par ailleurs, dans des installations comportant un grand nombre de boîtes à gants, elles-mêmes équipées d'un grand nombre de gants, le suivi de la date de chacun des gants devient très complexe.

En effet il est souhaitable de pouvoir identifier tous les gants d'une installation, leur emplacement, leur modèle et leur date de péremption.

On se rend compte qu'un tel suivi, dans le cas où il est effectué par un opérateur de manière manuelle, requiert un temps important sans que la fiabilité du suivi soit garantie.

### EXPOSÉ DE L'INVENTION

C'est par conséquent un but de la présente invention d'offrir une boîte à gant, des gants et un dispositif de changement de gant permettant d'identifier les gants et de suivre le changement sur une boîte à gant ou un isolateur, plus généralement de suivre tout objet monté sur une boîte à gants ou un isolateur.

Le but précédemment énoncé est atteint par une installation mettant en oeuvre la technologie RFID (Identification par Radio Fréquences) pour assurer un suivi sûr et efficace des gants ou des objets montés sur une boîte à gant.

L'invention met en oeuvre comporte une boite à gants, au moins un gant munie d'une bague montée dans une bague d'enceinte solidaire de la paroi, une bague d'immobilisation de la bague de gant dans la bride et un dispositif de changement de gant. La bague de gant, la bague d'enceinte et la bague d'immobilisation comportent chacune une puce RFID et le dispositif de changement de gant comporte un lecteur RFID capable de communiquer avec les puces RFID afin de les identifier et d'enregistrer les caractéristiques des éléments qui les portent telles que l'emplacement des bagues, le modèle des gants, la date de péremption des gants... dans une base de données.

Ainsi, chaque gant est enregistré et est suivi et chaque opération de changement de gant est enregistrée, ce qui permet de faire un suivi sur la maintenance des boîtes à gants.

De manière particulièrement avantageuse, le lecteur et les puces RFID peuvent permettre de sécuriser les opérations de changement de gants.

Par exemple, il peut être détecté sur la bague d'immobilisation a bien été remise en place ou si le gant neuf correspond à celui attendu.

Avantageusement, l'opérateur peut aussi être porteur d'une puce RFID qui l'identifie. Ainsi il peut être vérifié si l'opérateur est habilité à faire ce changement de gant. En outre cette information permet de compléter la base de données afin qu'elle soit la plus exhaustive possible.

En cas d'anomalie, un signal d'alarme est avantageusement émis pour alerter l'opérateur, voire un dispositif mécanique empêche la poursuite de la procédure de changement de gant.

La présente invention a alors pour objet un dispositif de changement des gants sur une boîte à gants, ladite boîte à gants comportant des parois délimitant une enceinte fermée, au moins un rond de gant réalisé dans une des parois, ledit rond de gant comportant une bague d'enceinte solidaire de la paroi et délimitant un passage dans lequel est destiné à être monté de manière étanche un gant, ledit gant comportant une bague de gant portant une partie souple destinée à recevoir une main d'un opérateur, ledit dispositif de changement de gant comportant un corps destiné à recevoir un gant neuf, un mécanisme apte à appliquer un effort de poussée sur le gant neuf de sorte à provoquer sa mise en place dans le rond de gant en lieu et place d'un gant usagé, un lecteur RFID muni d'au moins une antenne destiné à communiquer avec des puces RFID portées par les gants et par la bague d'enceinte de la boîte à gants, une carte électronique connectée au lecteur RFID pour stocker les informations reçues desdites puces RFID.

De préférence, le dispositif de changement de gant comporte autant d'antennes que de puces. RFID avec lesquelles il est destiné à communiquer.

Le dispositif de changement de gant comporte avantageusement un mécanisme d'anticollision permettant une communication avec lesdites puces de manière successives.

Le dispositif de changement de gant peut comporter des moyens de détection de la présence ou de l'absence d'un gant neuf monté dans son corps. Par exemple, les moyens de détection comportent un élément mobile dont la position est sensible à la présence ou à l'absence de gant neuf et un interrupteur électrique envoyant un signal à la carte électronique e fonction du la position de l'élément mobile.

De manière très avantageuse, la carte électronique comporte des moyens aptes à émettre des signaux d'alarme et/ou de commande en fonction des informations reçus desdites cellules RFID. Les signaux d'alarme sont par exemple sonores et/ou visuels.

De préférence, le dispositif de changement de gants comporte des moyens mécaniques aptes à empêcher le changement de gant, lesdits moyens étant activés par un signal de commande émis par ladite carte électronique.

La présente invention a également pour objet une boîte à gants destiné à l'isolation d'une volume par rapport à un environnement extérieur comportant des parois délimitant une enceinte fermée, au moins un rond de gant réalisé dans une des parois, ledit rond de gant comportant une bague d'enceinte solidaire de la paroi et délimitant un passage dans lequel est destiné à être monté de manière étanche un dispositif, ladite bague d'enceinte étant munie d'une première puce d'identification par radiofréquence, dite puce RFID, destinée à communiquer avec un lecteur d'identification par radiofréquence, dit lecteur RFID, ledit puce RFID comportant des informations sur ladite bague d'enceinte.

De préférence, la boîte à gant comporte une bague d'immobilisation montée sur la bague d'enceinte et sur le dispositif logé dans ladite d'enceinte pour immobiliser le dispositif par rapport à ladite bague d'enceinte, ladite bague d'immobilisation comportant une deuxième puce RFID, destinée à communiquer avec un lecteur d'identification par radiofréquence, dit lecteur RFID, ladite deuxième puce RFID comportant des informations sur ladite bague d'immobilisation

La présente invention a également pour objet un dispositif destiné à être mis en place dans un rond de gant d'une boîte à gants selon l'invention, et à obturer la passage de la bague d'enceinte de manière étanche, ledit dispositif comportant une bague coopérant de manière étanche avec la bague d'enceinte, un joint étant prévu sur la périphérie extérieure de la bague de dispositif, ladite bague comportant une troisième puce RFID destinée à communiquer avec un lecteur RFID, ledit troisième puce RFID comportant des informations sur ledit dispositif.

Le dispositif est avantageusement un gant, et ladite bague dudit dispositif étant une bague de gant portant une partie souple destinée à recevoir une main d'un opérateur. En variante, la bague pourrait être obturée de sorte à former un bouchon.

La présente invention a également pour objet une installation comportant au moins une boîte à gant selon l'invention, un dispositif de changement de gant selon l'invention, au moins deux gants selon l'invention, un gant étant en place dans un rond de gant, dit gant usagé, de ladite boîte à gants et un gant étant destiné être mis en place dans le dispositif de changement de gant en vu du remplacement du gant usagé, dit gant neuf, un ordinateur destiné à collecter et à traiter les informations lues par le lecteur RFID et stockées temporairement dans la carte électronique et des moyens de connexion entre l'ordinateur et la carte électronique.

Avantageusement, l'installation comporte au moins une quatrième puce RFID d'identification d'un opérateur, ladite quatrième puce RFID comportant des informations sur l'habilitation de l'opérateur à effectuer une opération de changement de gant, et étant destinée à être porté par l'opérateur.

Dans un exemple, les puces RFID sont surmoulées dans la bague de cellule, et/ou la bague de gant et/ou la bague d'immobilisation. Dans un autre exemple, les puces RFID sont rapportées sur la bague de cellule, et/ou la bague de gant et /ou la bague d'immobilisation, par exemple par collage.

les données stockées dans lesdites puces sont par exemple le numéro de série des gant montés sur chaque bague de cellule, du modèle du gant ou du bouchon obturant la bague de cellule à la place d'un gant, de la date de péremption de la bague d'immobilisation, de la date du remplacement dudit gant, du nom ou du numéro de l'opérateur.

La présente invention a également pour objet un procédé de changement de gant dans une installation selon l'invention, comportant les étapes :
a) mise en place du dispositif de changement de gant à proximité du rond de gant dont le gant est à changer, et lecture par le lecteur RFID d'au moins la première puce RFID de la bague d'enceinte et d'au moins la troisième puce RFID de la bague de gant du gant usagé,
b) mise en place du gant neuf dans le dispositif de changement de gant et lecture de la troisième puce RFID du gant neuf par le lecteur RFID,
c) positionnement du dispositif de changement de gant sur la bague d'enceinte, avec éventuellement une nouvelle lecture de la première puce RFID de la bague d'enceinte,
d) actionnement du mécanisme de changement de gant,
e) retrait du dispositif de changement de gant.
f) transfert des données vers l'ordinateur.

Dans un exemple de réalisation où la boîte à gant comporte une bague d'immobilisation, l'étape a) peut comporter également la lecture de la deuxième puce RFID de la bague d'immobilisation par le lecteur RFID et une étape de retrait de la bague d'immobilisation préalablement à l'étape b).

Le procédé de changement de gant selon l'invention peut avantageusement comporter une étape ultérieure à l'étape e) de lecture des puces de la bague d'enceinte et du gant.

Le procédé de changement de gant peut comporter une étape e1) de remise en place d'une bague d'immobilisation sur le rond de gant après l'étape e) et de lecture de la deuxième puce de ladite bague d'immobilisation par le lecteur RFID.

Le procédé de changement de gant comportant avantageusement une étape préalable à l'étape a) de lecture de la quatrième puce RFID d'identification de l'opérateur.

De manière très avantageuse, le procédé de changement de gant comporte, suite aux lectures des informations de la ou des puces RFID par le lecteur RFID, une étape de traitement des données par la carte électronique et une étape d'émission d'un signal d'alarme et/ou d'un signal de commande en cas de lecture de données prédéterminées.

Par exemple, le traitement de données par la carte électronique compare les données lues par le lecteur RFID à une liste de données autorisées ou interdites, par exemple pour les données identifiant l'opérateur ou le numéro de série d'un gant et /ou compare la date de changement du gant ou de péremption de la bague d'immobilisation à la date du jour.

### BRÈVE DESCRIPTION DES DESSINS

La présente invention sera mieux comprise à l'aide de la description qui va suivre et des dessins en annexe sur lesquels :
- la figure 1 est une représentation schématique en coupe d'une installation selon l'invention préalablement au changement de gant,
- la figure 2 est une vue en coupe d'un gant représenté seul.

### EXPOSÉ DÉTAILLÉ DE MODES DE RÉALISATION PARTICULIERS

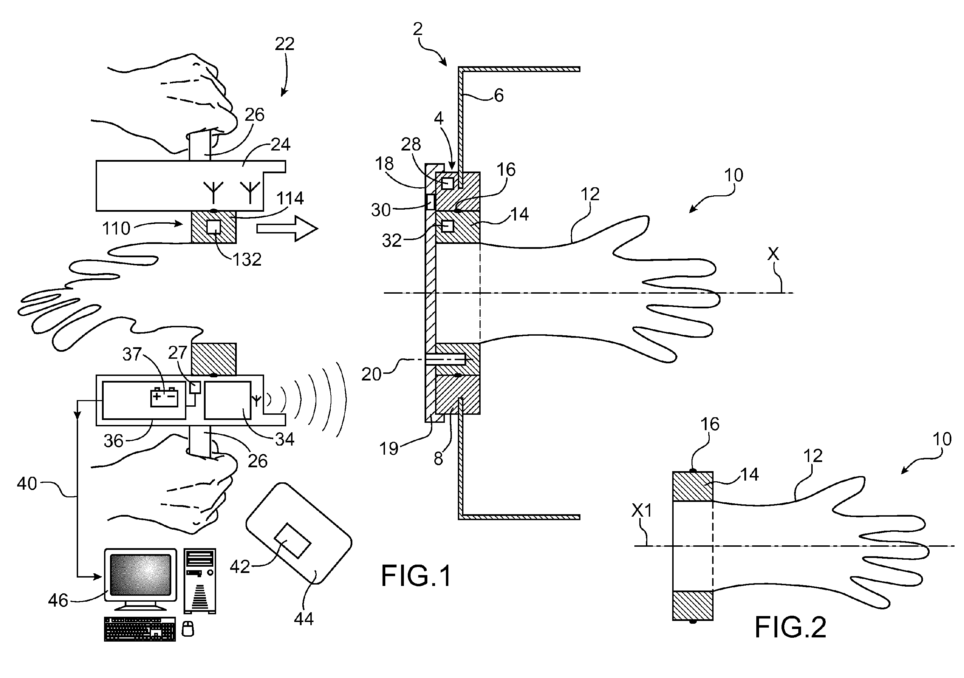

Sur la figure 1, on peut voir une installation schématique une boîte à gants 2 munie d'un rond de gant 4 formé dans une paroi 6 de la boîte à gants 2. De préférence la paroi 6 est transparente pour permettre à l'opérateur de visualiser l'intérieur de la boîte à gant 6.

La représentation de la figure 1 des différents éléments de la boîte à gants, des gants et du dispositif de changement de gant est schématique et utilisé uniquement à titre d'illustration pour aider à la compréhension de l'invention.

L'installation à laquelle s'applique l'invention est par exemple celle décrite dans le document FR 2 652 143.

Le rond de gant 4 comporte une bague 8 comportant un passage centrale d'axe X, désignée par "bague d'enceinte".

Le rond de gant 4 est obturé par un gant 10. Le gant 10 comporte une partie souple 12 destinée à recevoir la main et être disposé à l'intérieur de la boîte à gants 6 et une bague de gant 14 bordant une extrémité ouverte de la partie souple par laquelle l'opérateur entre sa main. Le gant 10 est représenté seul sur la figure 2.

Le diamètre extérieur de la bague de gant est égal au diamètre intérieur de la bague d'enceinte 8. La bague de gant 14 comporte sur sa périphérie extérieure un joint 16 destiné à réaliser l'étanchéité entre la bague d'enceinte 8 du rond gant 4 et la bague de gant 14. La bague de gant est représentée schématiquement, elle comporte d'autres éléments non représentés mais qui n'ont pas d'utilité pour la compréhension de l'invention.

La bague de gant 14 a un axe X1. La bague de gant 14 est introduite dans la bague d'enceinte 8 de telle manière que l'axe X et l'axe X1 soient coaxiaux.

Lorsque la bague de gant 14 est montée dans la bague d'enceinte 8, l'ensemble ainsi formé présente une face extérieure de forme annulaire obturée dans la partie centrale par la partie souple du gant.

De manière préférentielle une pièce 18 de forme annulaire, désignée « bague d'immobilisation », est rapportée sur la face extérieure de l'ensemble la bague d'enceinte et bague de gant, bloquant le mouvement du gant et évite tout déchaussement accidentel. La bague d'immobilisation 18 est bordée sur sa périphérie extérieure par un rebord 19.

Une goupille 20 est avantageusement prévue pour bloquer en rotation la bague de gant 14 et la bague d'enceinte 8.

L'installation comporte également un dispositif de changement de gant 22, désigné « canon d'éjection ». Celui-ci est également représenté de manière très schématique.

Le canon d'éjection 22 comporte un corps de forme tubulaire 24 destiné à recevoir un gant neuf 110 destiné être mis en lieu et place du gant usagé 10 en place dans le rond de gant 4. Le diamètre intérieur du corps 24 est donc sensiblement égal au diamètre extérieur de la bague de gant 14. Le canon d'éjection 22 comporte deux poignées 26 pour tenir le canon. Le canon d'éjection comporte également un mécanisme non représenté apte à exercer un effort de poussée sur la bague de gant 114 du gant neuf 110 en position dans le corps. Par exemple, le mécanisme est à actionnement manuel, transformant un mouvement de rotation des poignées 26 en un mouvement de translation le long de l'axe X d'un poussoir disposé dans le corps 24. Le poussoir est destiné à exercer un effort de poussée sur la bague de gant 114 du gant neuf 110 en direction de la bague de gant 14 du gant usagé 10 pour provoquer l'éjection du gant usagé 10 à l'intérieur de la boîte à gant et son remplacement par le gant neuf 110 sans rupture du confinement. Alternativement, le mécanisme peut être motorisé, et le poussoir est déplacé par une simple action sur un bouton de commande par l'opérateur.

Le canon d'éjection 22 comporte avantageusement un capteur 27 permettant de détecter la réalisation du changement de gant, cette détection est transmise à la carte électronique. La date et l'heure du changement de gant sont enregistrées dans la carte.

Le capteur 27 peut être, par exemple, un doigt mécanique qui actionne un interrupteur électrique qui envoie une impulsion à la carte électronique lorsque le gant neuf n'est plus dans le canon. Par exemple, le doigt 27 est monté coulissant dans le corps 24 suivant une direction perpendiculaire à l'axe du corps tubulaire. Celui-ci est en position reculée lorsque la bague de gant 114 du gant neuf 10 est en position prête à être mise en place dans de le rond de gant 4 et a une position sortie lorsque la bague de gant 114 du gant neuf 110 n'est plus en place, ce qui signifie qu'elle est montée dans le rond de gant 4.

L'installation comporte également des moyens pour assurer le suivi des gants. Ces moyens sont notamment destinés à collecter un certain nombre d'informations sur les gants comme par exemple leur emplacement, leur modèle, leur date de péremption...

Les moyens pour assurer le suivi est du type transmission par la technologie RFID (Identification par Radio Fréquences)

La technologie RFID (de l'anglais Radio Frequency IDentification) est une méthode pour mémoriser et récupérer des données à distance en utilisant des marqueurs appelés « étiquettes RFID ».

Les étiquettes RFID comprennent généralement au moins une antenne associée à une puce électronique qui leur permet de recevoir et de répondre à des requêtes radio émises depuis un émetteur-récepteur appelé lecteur. La puce électronique de l'étiquette contient généralement au moins des données d'identification.

Ainsi, la technologie RFID permet notamment une détection de l'étiquette par échanges à l'aide d'ondes radio entre une étiquette RFID et le lecteur lorsqu'elle se trouve à sa portée dans un champ électromagnétique établi par ce dernier.

Ce champ électromagnétique est généralement créé à l'aide d'un générateur radiofréquence se trouvant dans le lecteur et à l'aide d'une antenne connectée à ce lecteur.

Une première puce RFID 28 équipe la bague d'enceinte, une deuxième puce RFID 30 équipe la bague d'immobilisation et une troisième puce RFID 32 équipe la bague de gant 14. De préférence l'étiquette des puces RFID sont passives et se contentent de modifier le champ électromagnétique généré par le lecteur pour transmettre ses données d'identification. Le gant 110 comporte une puce RFID 132.

Un lecteur RFID 34 équipe le canon d'éjection 22. Une carte électronique à microcontrôleur 36 équipe également le canon d'éjection, et pilote le lecteur RFID 34. Cette carte 36 peut être reliée à une interface simple, par exemple un écran alphanumérique LCD 2x16 caractères + 4 boutons, permettant le paramétrage. En variante, le paramétrage peut être effectué en connectant la carte électronique à un ordinateur. Un moyen de connexion 40 entre le lecteur RFID et un ordinateur 46 est prévu, par exemple du type liaison Ethernet, liaison wifi, liaison USB, etc. de sorte à transmettre à celui-ci les informations collectées. Avantageusement la carte électronique 36 et le lecteur RFID 34 sont alimentés par une batterie 37 rendant le canon d'éjection 22 très maniable.

De manière très avantageuse, l'installation comporte également un quatrième puce RFID 42 pour identifier l'opérateur. Par exemple, la quatrième puce RFID 42 est insérée dans une carte 44 par exemple au format type « carte à puce ». Cette carte est destiné à être portée par l'opérateur. De manière alternative, l'opérateur peut s'identifier en utilisant l'interface du canon d'éjection ou encore en connectant le canon d'éjection à un ordinateur et en s'identifiant directement sur l'ordinateur.

Par exemple et de manière non limitative, les puces RFID 28, 30, 32 sont intégrées, par exemple dans la bague de gant et la bride par surmoulage, soit par collage de la puce RFID, par exemple de type étiquette autocollante, sur la pièce considérée.

Nous allons maintenant expliquer le fonctionnement de l'installation selon l'invention.

Lors d'une étape a) l'opérateur prend le canon d'éjection. De manière très avantageuse, grâce à la puce RFID équipant la carte que porte l'opérateur celui-ci s'identifie automatiquement en approchant sa carte 44 du canon d'éjection, plus particulièrement du lecteur RFID 34 porté par le canon d'éjection 22. Lors de cette approche, la carte électronique 34 du canon d'éjection 22, via son lecteur RFID 34, identifie le numéro de série de l'opérateur et l'enregistre, ainsi que la date et l'heure courante.

De manière très avantageuse, si l'opérateur n'est pas autorisé 36, un signal est déclenché par la carte électronique, par exemple une alarme sonore et/ou visuel telles que des LED clignotante et l'affichage d'un message sur l'écran du canon d'éjection.

De manière très avantageuse, le canon d'éjection 22 est équipé d'un moyen de verrouillage déclenché lorsque l'opérateur détecté n'est pas conforme. Par exemple, les moyens de verrouillage peuvent être formés par un doigt mécanique libéré par une commande de la carte électronique et dont l'extension provoque une impossibilité mécanique d'utiliser le canon d'éjection 22, de sorte que l'opération de changement de gant est mécaniquement interdite.

Lors d'une étape suivante, l'opérateur approche le canon d'éjection 22 du gant usagé 10 qui est monté dans la bague d'enceinte. Lors de cette manipulation, le lecteur RFID 34 lit la puce RFID 30 de la bague d'immobilisation, la puce RFID de la bague d'enceinte du rond de gant et la bague de gant 14 du gant usagé 10. De ce fait, ces trois éléments sont identifiés. Si le numéro de série de la bague d'enceinte est inscrite sur une « liste interdite » ou n'est pas inscrite sur une « liste autorisée », l'erreur sera signalée par exemple comme précédemment au moyen d'une alarme sonore et/ou visuelle et/ou par un blocage du canon d'éjection.

La «liste interdite» ou la «liste autorisée» est préalablement chargée dans la mémoire, par exemple de type flash, de la carte électronique du canon d'éjection lors d'une précédente connexion à l'ordinateur.

Le choix de travailler en « liste autorisée » ou « liste interdite » est choisi en fonction des contraintes. La «liste autorisée» offre une plus grand sécurité, en revanche dans le cas d'une installation où toutes les bagues de cellules ne sont pas équipées de puces RFID peut complexifier le fonctionnement de l'installation.

Lors d'une étape suivante, l'opérateur retire la bague d'immobilisation recouvrant la bague d'enceinte et la bague de gant 14 du gant usagé 10.

Lors d'une étape suivante b), l'opérateur place ensuite le gant neuf 110 dans le corps tubulaire 24 du canon d'éjection 22. La carte électronique 36 identifie alors la présence de la puce RFID du gant et enregistre, par exemple le type du gant, son numéro de série, la date et l'heure courante. Avantageusement, si le gant neuf 110 est déjà périmé et/ou n'a pas la bonne référence, un signal est émis comme pour les étapes précédentes. On considérera un gant comme périmé si sa date de péremption est antérieure à la date prévue du prochain remplacement. Cette date de prochain remplacement peut être soit une date fixe (par exemple : le gant est remplacé tous les ans, la deuxième semaine de janvier) soit une date calculée à partir de la date de remplacement (par exemple : le gant doit être remplacé au plus tard un an après sa mise en place). Grâce aux données informatisées contenues dans la carte électronique 36, il est possible d'envisager des règles différentes pour certains ronds de gants, grâce à leur identification par numéro de série, par exemple pour une zone critique nécessitant une fréquence de remplacement plus élevée.

Lors d'une étape suivante c), l'opérateur positionne le canon d'éjection 22 sur la bague d'enceinte et la bague de gant 14 du gant usagé 10. La bague d'enceinte étant elle-même munie d'une puce RFID, elle est identifiée de la même manière par le lecteur du canon d'éjection 22, celui-ci lit alors son numéro de série, la date et heure courante. De manière avantageuse, si la bague d'enceinte approchée n'est pas la même que celle ayant été approchée à l'étape a), un signal d'alarme est émis. Ainsi, l'opérateur est empêché de faire une erreur entre la détection la bague d'enceinte dont le gant doit être changé et une bague d'enceinte voisine.

Lors d'une étape suivante d), l'opérateur effectue le changement de gant. Il actionne le canon d'éjection 22, un effort de poussée axial est alors appliqué sur la bague de gant 114 du gant neuf 110, qui applique elle-même un effort de poussée sur la bague de gant 14 du gant usagé 10. Cette dernière 14 est alors éjectée dans la boîte à gants et la bague de gant 114 du gant neuf 110 prend sa place dans la bague d'enceinte. Lorsque le canon d'éjection 22 est équipé du capteur 27 de détection de la présence du gant neuf 10, le signal du capteur 27 change d'état, passant d'une détection de gant à une absence de détection, ce qui est interprété comme la réalisation du changement de gant.

Le gant usagé 10 est ensuite éliminé par une sortie des déchets de la boîte à gants.

Lors d'une étape suivante e), l'opérateur retire le canon d'éjection 22 et met en place la bague d'immobilisation et la verrouille à l'aide de la goupille. En fonction de la date de péremption de la bague d'immobilisation, l'opérateur peut être amené soit à remettre en place la bague d'immobilisation retirée à l'étape a), soit à la remplacer par une bague d'immobilisation neuve.

De préférence, lors d'une étape suivante, l'opérateur approche à nouveau le canon d'éjection 22 pour identifier la bague d'immobilisation, ce qui permet d'enregistrer l'heure de remise en place de la bague et d'enregistrer la nouvelle bague d'immobilisation le cas échéant.

Cette manipulation, permet au lecteur RFID d'identifier, outre la bague d'immobilisation, tous les autres éléments en place, par l'intermédiaire de leurs puces RFID respectives : la bague d'enceinte et le gant neuf 110.

Avantageusement, lors de cette étape l'une et/ou l'autre des vérifications suivantes peuvent être faites :
- est-ce que l'opérateur a bien approché le canon de la bague d'enceinte dont le gant vient d'être changé ?
- est-ce que la bague d'immobilisation est bien présente et est-ce que sa date de péremption conforme, c'est-à-dire ne sera-t-elle pas périmée à la date planifiée de remplacement du gant qui vient d'être monté ?

Si l'une et/ou l'autre des ces vérifications n'est pas positive, un message d'erreur expliquant l'incident est affiché accompagné avantageusement de signaux d'alarme similaires à ceux décrits peuvent être émis.

Lors d'une étape suivante f), l'opérateur connecte le canon d'éjection à l'ordinateur par les moyens de connexion 40. L'ordinateur récupère alors les données de connexion temporairement stockées dans la carte électronique 36. Avantageusement la mémoire de la carté électronique 36 est suffisante pour éviter d'avoir à effectuer des déchargements de données trop fréquents.

Le logiciel équipant l'ordinateur permet alors de mémoriser toutes les données de changement de gants, de traiter celles-ci et de fournir des informations très utiles pour la gestion du remplacement des gants telles que :
a) la liste des gants à changer à court terme, i.e. la liste des gants arrivant en fin de date limite d'utilisation)
b) la liste des bagues d'immobilisation à changer à court terme,
c) des statistiques de changement par opérateur,
d) des données sur la durée es étapes de changement de gants

D'autres informations peuvent également être fournies par le logiciel en fonction des besoins de l'utilisateur de l'installation

Avantageusement et comme cela est représenté, le canon d'éjection 22 est muni d'un lecteur RFID 34 et de plusieurs antennes, toutes reliées au lecteur RFID.

Dans un souci de clarté de la figure unique, la liaison électrique entre chaque antenne et le lecteur RFID 34 n'a pas été représentée.

Cette réalisation a pour avantage de simplifier le canon. En outre, la consommation électrique est réduite par rapport à un lecteur équipé de plusieurs antennes, ce qui permet une alimentation par batterie de taille réduite. La manipulation du canon d'éjection est alors simplifiée. De plus, une boîte à gants comporte généralement aux moins deux gants pour permettre la manipulation deux mains par l'opérateur, l'utilisation de plusieurs antennes évite le risque de lecture des puces RFID d'un gant voisin sur la boîte à gant. Cependant l'utilisation d'un lecteur RFID et d'une seule antenne ne sort pas du cadre de la présente invention.

Le lecteur RFID est apte, dans un fonctionnement normal de l'installation, à voir dans son champ plusieurs puces RFID, cinq puces dans l'exemple représenté: la puce RFID du gant neuf, la puce RFID gant usagé, la puce RFID de la bague d'immobilisation, la puce RFID de la bague d'enceinte et la puce RFID de la carte d'identification de l'opérateur. Le lecteur RFID comporte un mécanisme anticollision pour permettre à celui-ci RFID de communiquer successivement avec chacune des puces RFID.

Les différentes antennes sont positionnées de façon à se rapprocher suffisamment de ces différentes puces RFID. Il existe plusieurs techniques d'anticollision connues de l'homme du métier. Par exemple la méthode temporelle peut être mise en oeuvre. Dans la méthode temporelle, le lecteur, après avoir détecté une collision (réception d'une « cacophonie » de signaux de différentes puces RFID ayant répondu simultanément à une requête du lecteur), envoie une requête spécifique indiquant à chaque puce qu'elle doit répondre au bout d'un temps aléatoire. Ainsi la probabilité d'une collision diminue fortement. S'il s'en produit une à nouveau malgré tout, le processus est répété jusqu'à la réussite de la communication.

Dans le cas d'une installation de l'industrie nucléaire, il est possible que la puce RFID du gant usagé soit endommagée suite à une exposition prolongée aux radiations. Ceci se traduira soit par une puce RFID muette, soit par une puce RFID retournant un numéro de série erroné. Dans les deux cas, la puce RFID pourra être ignorée, sans que cela mette en défaut le suivi puisque cette puce aura été préalablement tracée lors de son installation, et la puce RFID du gant neuf n'a pas encore été exposée aux radiations, elle fonctionnera correctement. Le cas d'un numéro de série erroné se traitera par exemple par un mécanisme de redondance et vérification, par exemple de type « CRC » (Cyclic Redundancy Check).

Concernant la puce RFID du rond de gant, celle-ci est située dans ou sur la bague d'enceinte, de préférence de sorte à être à l'extérieur de l'enceinte. En outre, on peut prévoir avantageusement qu'une épaisseur suffisante de matière du rond de gant protège la puce. Ceci implique que la puce doit être placée à proximité de la face extérieure du rond de gant.

De préférence, on prévoit que la puce puisse être facilement remplacée.

Par exemple si elle se trouve dans le rond de gant, on prévoira un logement pour la puce refermé par un couvercle amovible, ou elle sera de type autocollant fixée sur la face extérieure du rond de gant.

De préférence, on peut prévoir un signal pour prévenir que la puce RFID est illisible, lorsqu'un changement de gant est détecté sans qu'une puce de bague d'enceinte n'entre dans le champ du lecteur RFID.

Si dans le cas où la puce RFID de la bague d'enceinte est illisible, on peut prévoir, si la puce du gant usagé est toujours opérationnelle, de l'utiliser pour identifier la bague d'enceinte en utilisant la base de données, qui a stocké le numéro de série de la bague d'enceinte lors du précédent changement de gant.

L'exemple de l'installation décrit ci-dessus applique le suivi aux gants montés sur les boîtes à gant mais l'installation selon l'invention peut permettre le suivi d'autres objets montés sur la boîte à gant, comme par exemple les bouchons qui peuvent se connecter de la même manière que les gants dans les bagues de cellules pour des zones inutilisées pendant de longues périodes.

Grâce à l'installation selon l'invention, on réalise un suivi dans une base de données centralisée en stockant des données telles que :
- du numéro de série du gant monté sur chaque bague de cellule,
- du modèle du gant ou du bouchon obturant la bague de cellule à la place d'un gant,
- la date de péremption des gants et des bagues d'immobilisation,
- la date du remplacement,
- le nom de l'opérateur ayant effectué le remplacement.

La base de données peut collecter les informations pour une boîte à gants et avantageusement pour toutes les boîtes à gants d'une usine, par exemple de fabrication de combustible nucléaire.

En outre, l'installation peut être utilisée de manière très avantageuse pour interdire les fausses manipulations, telles que :
- la manipulation du canon d'éjection par un opérateur non habilité,
- le remplacement d'un gant usagé par un gant périmé,
- l'oubli de la remise en place de la bague d'immobilisation,
- l'utilisation d'une bague d'immobilisation qui serait périmée,
- le changement de gant sur une bague de cellule non programmée pour un changement.

L'installation selon l'invention permet donc avantageusement d'assurer une protection maximale contre les fausses manipulations, pouvant mettre en danger la sécurité des opérateurs, d'éviter l'omission d'une étape du processus de changement de gant usagé, et d'éviter l'utilisation de composants dont la date de préemption n'est pas dépassée.

Il est à noter que les distances de communication entre le lecteur RFID et les puces RFID selon l'invention sont faibles, par exemple inférieures à quelques centimètres, puisque le canon d'éjection vient en appui contre le rond de gant et contient la bague de gant neuf.

Différentes fréquences standards existent pour la technologie RFID : 125 kHz, 13,56 MHz, 865 MHz en Europe, 868 MHz en Europe, 915 MHz aux USA, 2,45 GHz, 5,8 GHz. Les fréquences les plus basses autorisent la meilleure pénétration dans la matière. Les fréquences les plus élevées autorisent des débits de communication plus élevés. Dans la présente invention si la quantité d'informations échangées entre la puce RFID et le lecteur reste faible, une vitesse de communication suffisamment rapide est requise pour le mécanisme anticollision. De ce fait, une fréquence d'au moins 13,56 MHz est préférée pour la présente invention.

A titre d'exemple, il pourrait être utilisé un Module RFID miniature HF 13,56MHz : SkyeModule^{®} M1-mini, les différentes antennes seraient raccordées au lecteur par la sortie prévue pour l'antenne extérieure.

## Revendications

1. Dispositif de changement des gants sur une boîte à gants, ladite boîte à gants (2) comportant des parois délimitant une enceinte fermée, au moins un rond de gant (4) réalisé dans une (6) des parois, ledit rond de gant (4) comportant une bague d'enceinte (8) solidaire de la paroi (6) et délimitant un passage dans lequel est destiné à être monté de manière étanche un gant (10), ledit gant (10) comportant une bague de gant (14) portant une partie souple (12) destinée à recevoir une main d'un opérateur, ledit dispositif de changement de gant (22) comportant un corps (24) destiné à recevoir un gant neuf (110) et un mécanisme apte à appliquer un effort de poussée sur le gant neuf (110) de sorte à provoquer sa mise en place dans le rond de gant (4) en lieu et place d'un gant usagé (10), ledit dispositif étant en outre **caractérisé par** un lecteur RFID (34) muni d'au moins une antenne destiné à communiquer avec des puces RFID (28, 32, 132) portées par les gants (10, 110) et par la bague d'enceinte (8) de la boîte à gants, une carte électronique (36) connectée au lecteur RFID (34) pour stocker les informations reçues desdites puces RFID (28, 32, 132).

2. Dispositif de changement de gants selon la revendication 1, comportant autant d'antennes que de puces RFID avec lesquelles il est destiné à communiquer.

3. Dispositif de changement de gants selon la revendication 1 ou 2, comportant un mécanisme d'anticollision permettant une communication avec lesdites puces de manière successives.

4. Dispositif de changement de gants selon l'une des revendications 1 à 3, comportant des moyens de détection (27) de la présence ou de l'absence d'un gant neuf (110) monté dans son corps (24), les moyens de détection (27) comportant par exemple un élément mobile dont la position est sensible à la présence ou à l'absence de gant neuf et un interrupteur électrique envoyant un signal à la carte électronique (36) en fonction du la position de l'élément mobile.

5. Dispositif de changement de gants selon l'une des revendications 1 à 4, dans lequel la carte électronique (36) comporte des moyens aptes à émettre des signaux d'alarme et/ou de commande en fonction des informations reçus desdites puces RFID (28, 32, 132), les signaux d'alarme étant par exemple sonores et/ou visuels.

6. Dispositif de changement de gants selon l'une des revendications 1 à 5, comportant des moyens mécaniques aptes à empêcher le changement de gant, lesdits moyens étant activés par un signal de commande émis par ladite carte électronique.

7. Boîte à gants destiné à l'isolation d'une volume par rapport à un environnement extérieur comportant des parois délimitant une enceinte fermée, au moins un rond de gant (4) réalisé dans une (6) des parois, ledit rond de gant (4) comportant une bague d'enceinte (8) solidaire de la paroi (6) et délimitant un passage dans lequel est destiné à être monté de manière étanche un dispositif, ladite boîte à gants étant **caractérisée en ce que** la bague d'enceinte (8) est munie d'une première puce d'identification (28) par radiofréquence, dite puce RFID, destinée à communiquer avec le lecteur RFID (34) porté par le dispositif de changement de gant (22) selon l'une des revendications 1 à 6, ladite puce RFID (28) comportant des informations sur ladite bague d'enceinte.

8. Boîte à gant selon la revendication 7, comportant une bague d'immobilisation (18) montée sur la bague d'enceinte (8) et sur le dispositif logé dans ladite d'enceinte pour immobiliser le dispositif par rapport à ladite bague d'enceinte, (8) ladite bague d'immobilisation (18) comportant une deuxième puce RFID (30), destinée à communiquer avec le lecteur RFID (34), ladite deuxième puce RFID (30) comportant des informations sur ladite bague d'immobilisation (18).

9. Dispositif destiné à être mis en place dans un rond de gant (4) d'une boîte à gants selon la revendication 7 ou 8, et à obturer le passage de la bague d'enceinte (8) de manière étanche, ledit dispositif comportant une bague (14) coopérant de manière étanche avec la bague d'enceinte (8), un joint (16) étant prévu sur la périphérie extérieure de la bague (14) de dispositif, ledit dispositif étant **caractérisée en ce que** la bague comporte une troisième puce RFID (32) destinée à communiquer avec un lecteur RFID (34), ladite troisième puce RFID (32) comportant des informations sur ledit dispositif.

10. Dispositif destiné à être mis en place dans un rond de gant d'une boîte à gants selon la revendication 9, ledit dispositif étant un gant, et ladite bague (14) dudit dispositif étant une bague de gant portant une partie souple (12) destinée à recevoir une main d'un opérateur ou la bague étant obturée de sorte à former un bouchon.

11. Installation comportant au moins une boîte à gant (2) selon la revendication 7 ou 8, un dispositif de changement de gant (22) selon l'une des revendications 1 à 6, au moins deux gants (10, 110) selon la des revendication 10, un gant (10) étant en place dans un rond de gant (4), dit gant usagé, de ladite boîte à gants (2) et un gant (110), dit gant neuf, étant destiné être mis en place dans le dispositif de changement de gant (22) en vu du remplacement du gant usagé (10), un ordinateur (46) destiné à collecter et à traiter les informations lues par le lecteur RFID (34) et stockées temporairement dans la carte électronique (36) et des moyens de connexion entre l'ordinateur (46) et la carte électronique (36).

12. Installation selon la revendication précédente, comportant au moins une quatrième puce RFID (42) d'identification d'un opérateur, ladite quatrième puce RFID (42) comportant des informations sur l'habilitation de l'opérateur à effectuer une opération de changement de gant, et étant destinée à être porté par l'opérateur.

13. Installation selon la revendication 11 ou 12, dans laquelle les puces RFID (28, 32, 132, 30) sont surmoulées dans la bague de cellule (8), et/ou la bague de gant (14) et/ou la bague d'immobilisation (18) ou dans laquelle les puces RFID sont rapportées (28, 32, 132, 30) sur la bague de cellule (8), et/ou la bague de gant (14) et /ou la bague d'immobilisation (18), par exemple par collage.

14. Installation selon l'une des revendications 12 à 13, dans laquelle les données stockées dans lesdites puces (28, 32, 132, 30) sont le numéro de série des gant montés sur chaque bague de cellule (8), du modèle du gant (10, 110) ou du bouchon obturant la bague de cellule (8) à la place d'un gant, de la date de péremption de la bague d'immobilisation (18), de la date du remplacement dudit gant (10, 110), du nom ou du numéro de l'opérateur.

15. Procédé de changement de gant dans une installation selon t'une des revendications 11 à 14, comportant les étapes :
a) mise en place du dispositif de changement de gant à proximité du rond de gant dont le gant est à changer, et lecture par le lecteur RFID d'au moins la première puce RFID de la bague d'enceinte et d'au moins la troisième puce RFID de la bague de gant du gant usagé,
b) mise en place du gant neuf dans le dispositif de changement de gant et lecture de la troisième puce RFID du gant neuf par le lecteur RFID,
c) positionnement du dispositif de changement de gant sur la bague d'enceinte, avec éventuellement une nouvelle lecture de la première puce RFID de la bague d'enceinte,
d) actionnement du mécanisme de changement de gant,
e) retrait du dispositif de changement de gant,
f) transfert des données vers l'ordinateur.

16. Procédé de changement de gant selon la revendication 15, dans lequel la boîte à gant comporte une bague d'immobilisation, l'étape a) comporte également la lecture de la deuxième puce RFID de la bague d'immobilisation par le lecteur RFID et une étape de retrait de la bague d'immobilisation préalablement à l'étape b).

17. Procédé de changement de gant selon la revendication 16, comportant une étape ultérieure à l'étape e) de lecture des puces de la bague d'enceinte et du gant, le procédé de changement de gant comportant avantageusement une étape e1) de remise en place d'une bague d'immobilisation sur le rond de gant après l'étape e) et de lecture de la deuxième puce de ladite bague d'immobilisation par le lecteur RFID.

18. Procédé de changement de gant selon l'une des revendications 15 à 17, comportant une étape préalable à l'étape a) de lecture de la quatrième puce RFID d'identification de l'opérateur.

19. Procédé de changement de gant selon l'une des revendications 15 à 18, comportant suite aux lectures des informations de la ou des puces RFID par le lecteur RFID, un étape de traitement des données par la carte électronique et une étape d'émission d'un signal d'alarme et/ou d'un signal de commande en cas de lecture de données prédéterminées.

20. Procédé de changement de gant selon la revendication 19, dans lequel le traitement de données par la carte électronique compare les données lues par le lecteur RFID à une liste de données autorisées ou interdites, par exemple pour les données identifiant l'opérateur ou le numéro de série d'un gant et /ou compare la date de changement du gant ou de péremption de la bague d'immobilisation à la date du jour.

## Patentansprüche

1. Vorrichtung zum Wechseln der Handschuhe bei einer Handschuhbox, wobei die Handschuhbox (2) Wände umfasst, die ein geschlossenes Gehäuse begrenzen, wobei wenigstens eine Handschuhöffnung (4) in einer (6) der Wände realisiert ist, wobei die Handschuhöffnung (4) einen Gehäusering (8) umfasst, der mit der Wand (6) verbunden ist und einen Durchgang begrenzt, in dem ein Handschuh (10) in dichter Weise montiert werden soll, wobei der Handschuh (10) einen Handschuhring (14) umfasst, der ein flexibles Teil (12) trägt, das dazu ausgelegt ist, eine Hand eines Benutzers aufzunehmen, wobei die Handschuhwechselvorrichtung (22) einen Körper (24) umfasst, der dazu ausgelegt ist, einen neuen Handschuh (110) aufzunehmen, sowie einen Mechanismus, der dazu ausgelegt ist, eine Druckkraft auf den neuen Handschuh (110) derart auszuüben, dass seine Platzierung in der Handschuhöffnung (4) anstelle eines gebrauchten Handschuhs (10) bewirkt wird, wobei die Vorrichtung ferner **gekennzeichnet ist durch** einen RFID-Leser (34), der mit wenigstens einer Antenne ausgestattet ist, die dazu ausgelegt ist, mit RFID-Chips (28, 32, 132) zu kommunizieren, die von den Handschuhen (10, 110) und von dem Gehäusering (8) der Handschuhbox getragen werden, wobei eine Elektronikkarte (36) an den RFID-Leser (34) angeschlossen ist, um die von den RFID-Chips (28, 32, 132) empfangenen Informationen zu speichern.

2. Vorrichtung zum Wechseln von Handschuhen nach Anspruch 1, umfassend ebenso viele Antennen wie RFID-Chips, mit denen sie kommunizieren soll.

3. Vorrichtung zum Wechseln von Handschuhen nach Anspruch 1 oder 2, umfassend einen Antikollisionsmechanismus, der eine Kommunikation mit den Chips in sukzessiver Weise erlaubt.

4. Vorrichtung zum Wechseln von Handschuhen nach einem der Ansprüche 1 bis 3, umfassend Mittel (27) zur Erfassung des Vorhandenseins oder des Fehlens eines in ihrem Körper (24) montierten neuen Handschuhs (110), wobei die Erfassungsmittel (27) beispielsweise ein bewegliches Element umfassen, dessen Position auf das Vorhandensein oder das Fehlen des neuen Handschuhs sensitiv ist, sowie einen elektrischen Unterbrecher, der als Funktion der Position des beweglichen Elements ein Signal an die elektronische Karte (36) schickt.

5. Vorrichtung zum Wechseln von Handschuhen nach einem der Ansprüche 1 bis 4, bei der die elektronische Karte (36) Mittel umfasst, die dazu ausgelegt sind, Alarm- und/oder Steuersignale als Funktion der Informationen auszusenden, die von den RFID-Chips (28, 32, 132) empfangen werden, wobei die Alarmsignale beispielsweise akustisch und/oder optisch sind.

6. Vorrichtung zum Wechseln von Handschuhen nach einem der Ansprüche 1 bis 5, umfassend mechanische Mittel, die dazu ausgelegt sind, den Handschuhwechsel zu verhindern, wobei die Mittel durch ein Steuersignal aktiviert werden, das von der elektronischen Karte ausgesandt wird.

7. Handschuhbox, die für die Isolierung eines Volumens bezüglich einer äußeren Umgebung bestimmt ist, umfassend Wände, die einen geschlossenen Raum begrenzen, wobei wenigstens eine Handschuhöffnung (4) in einer (6) der Wände realisiert ist, wobei die Handschuhöffnung (4) einen Gehäusering (8) umfasst, der mit der Wand (6) verbunden ist und einen Durchgang begrenzt, in dem eine Vorrichtung in dichter Weise montiert werden soll, wobei die Handschuhbox **dadurch gekennzeichnet ist, dass** der Gehäusering (8) mit einem ersten Radiofrequenz-Identifikationschip (28) ausgestattet ist, genannt RFID-Chip, der dazu ausgelegt ist, mit dem RFID-Leser (34) zu kommunizieren, der von der Handschuhwechselvorrichtung (22) nach einem der Ansprüche 1 bis 6 getragen wird, wobei der RFID-Chip (28) Informationen über den Gehäusering enthält.

8. Handschuhbox nach Anspruch 7, umfassend einen Immobilisierungsring (18), der an dem Gehäusering (8) und an der Vorrichtung montiert ist, die in dem Gehäuse aufgenommen ist, um die Vorrichtung bezüglich des Gehäuserings (8) zu immobilisieren, wobei der Immobilisierungsring (18) einen zweiten RFID-Chip (30) umfasst, der dazu ausgelegt ist, mit dem RFID-Leser (34) zu kommunizieren, wobei der zweite RFID-Chip (30) Informationen über den Immobilisierungsring (18) enthält.

9. Vorrichtung, die dazu ausgelegt ist, in einer Handschuhöffnung (4) einer Handschuhbox nach Anspruch 7 oder 8 platziert zu sein und den Durchgang des Gehäuserings (8) in dichter Weise zu verschließen, wobei die Vorrichtung einen Ring (14) umfasst, der in dichter Weise mit dem Gehäusering (8) zusammenwirkt, wobei eine Dichtung (16) am äußeren Umfang des Rings (14) der Vorrichtung vorgesehen ist, wobei die Vorrichtung **dadurch gekennzeichnet ist, dass** der Ring einen dritten RFID-Chip (32) umfasst, der dazu ausgelegt ist, mit einem RFID-Leser (34) zu kommunizieren, wobei der dritte RFID-Chip (32) Informationen über die Vorrichtung enthält.

10. Vorrichtung, die dazu ausgelegt ist, in einer Handschuhöffnung einer Handschuhbox platziert zu sein, nach Anspruch 9, wobei die Vorrichtung ein Handschuh ist, und wobei der Ring (14) der Vorrichtung ein Handschuhring ist, der ein flexibles Teil (12) trägt, welches dazu ausgelegt ist, eine Hand eines Benutzers aufzunehmen, oder wobei der Ring derart verschlossen ist, dass er einen Stopfen bildet.

11. Anlage, umfassend wenigstens eine Handschuhbox (2) nach Anspruch 7 oder 8, eine Handschuhwechselvorrichtung (22) nach einem der Ansprüche 1 bis 6, und wenigstens zwei Handschuhe (10, 110), nach Anspruch 10, wobei ein Handschuh (10), genannt gebrauchter Handschuh, in einer Handschuhöffnung (4) der Handschuhbox (2) platziert ist, und ein Handschuh (110), genannt neuer Handschuh, im Hinblick auf ein Ersetzen des gebrauchten Handschuhs (10) in der Handschuhwechselvorrichtung (22) platziert werden soll, ferner umfassend einen Computer (46), der dazu ausgelegt ist, die Informationen zu sammeln und zu verarbeiten, die von dem RFID-Leser (34) gelesen und vorübergehend in der elektronischen Karte (36) gespeichert werden, sowie Anschlussmittel zwischen dem Computer (46) und der elektronischen Karte (36).

12. Anlage nach dem vorhergehenden Anspruch, umfassend wenigstens einen vierten RFID-Chip (42) zum Identifizieren eines Benutzers, wobei der vierte RFID-Chip (42) Informationen über die Berechtigung des Benutzers enthält, eine Handschuhwechseloperation durchzuführen, und dazu ausgelegt ist, von dem Benutzer getragen zu werden.

13. Anlage nach Anspruch 11 oder 12, bei der die RFID-Chips (28, 32, 132, 30) auf den Zellenring (8) und/oder den Handschuhring (14) und/oder den Immobilisierungsring (18) aufgeformt sind, oder bei der die RFID-Chips an dem Zellenring (8) und/oder dem Handschuhring (14) und/oder dem Immobilisierungsring (18) angebracht sind (28, 32, 132, 30), beispielsweise durch Kleben.

14. Anlage nach einem der Ansprüche 12 bis 13, bei der die in den Chips (28, 32, 132, 30) gespeicherten Daten die Seriennummer der an jedem Zellenring (8) montierten Handschuhe, des Modells des Handschuhs (10, 110) oder des Stopfens sind, der den Zellenring (8) anstelle eines Handschuhs verschließt, des Haltbarkeitsdatums des Immobilisierungsrings (18), des Ersetzungsdatums des Handschuhs (10, 110), des Namens oder der Nummer des Benutzers.

15. Verfahren zum Handschuhwechsel in einer Anlage nach einem der Ansprüche 11 bis 14, umfassend die Schritte:
a) Platzieren der Handschuhwechselvorrichtung in der Nähe der Handschuhöffnung, deren Handschuh gewechselt werden soll, und Auslesen wenigstens des ersten RFID-Chips des Gehäuserings und wenigstens des dritten RFID-Chips des Handschuhrings des gebrauchten Handschuhs durch den RFID-Leser,
b) Platzieren des neuen Handschuhs in der Handschuhwechselvorrichtung und Auslesen des dritten RFID-Chips des neuen Handschuhs durch den RFID-Leser,
c) Positionieren der Handschuhwechselvorrichtung an dem Gehäusering, ggf. zusammen mit einem erneuten Auslesen des ersten RFID-Chips des Gehäuserings,
d) Betätigen des Handschuhwechselmechanismus,
e) Zurückziehen der Handschuhwechselvorrichtung,
f) Übertragung der Daten zum Computer.

16. Verfahren zum Handschuhwechsel nach Anspruch 15, bei dem die Handschuhbox einen Immobilisierungsring umfasst, wobei der Schritt a) ferner das Auslesen des zweiten RFID-Chips des Immobilisierungsrings durch den RFID-Leser sowie einen Schritt des Zurückziehens des Immobilisierungsrings vor dem Schritt b) umfasst.

17. Verfahren zum Handschuhwechsel nach Anspruch 16, umfassend einen Schritt nach dem Schritt e) zum Auslesen der Chips des Gehäuserings und des Handschuhs, wobei das Verfahren zum Handschuhwechsel vorzugsweise einen Schritt e1) des erneuten Platzierens eines Immobilisierungsrings an der Handschuhöffnung nach dem Schritt e) und des Auslesens des zweiten Chips des Immobilisierungsrings durch den RFID-Leser umfasst.

18. Verfahren zum Handschuhwechsel nach einem der Ansprüche 15 bis 17, umfassend einen Schritt des Auslesens des vierten RFID-Chips zum Identifizieren des Benutzers vor dem Schritt a).

19. Verfahren zum Handschuhwechsel nach einem der Ansprüche 15 bis 18, umfassend im Anschluss an das Auslesen der Informationen des oder der RFID-Chip(s) durch den RFID-Leser einen Schritt der Verarbeitung der Daten durch die elektronische Karte und einen Schritt des Aussendens eines Alarmsignals und/oder eines Steuersignals im Fall des Auslesens vorbestimmter Daten.

20. Verfahren zum Handschuhwechsel nach Anspruch 19, bei dem die Verarbeitung von Daten durch die elektronische Karte die durch den RFID-Leser ausgelesenen Daten mit einer Liste von autorisierten oder verbotenen Daten vergleicht, beispielsweise für die Daten zum Identifizieren des Benutzers oder der Seriennummer eines Handschuhs, und/oder das Datum des Handschuhwechsels oder der Haltbarkeit des Immobilisierungsrings mit dem Tagesdatum vergleicht.

## Claims

1. Glove change device on a glove box, said glove box (2) comprising walls delimiting a closed box, at least one glove port (4) carried out in one (6) of the walls, said glove port (4) comprising a box ring (8) integral with the wall (6) and delimiting a passage wherein a glove (10) is intended to be sealingly mounted, said glove (10) comprising a glove ring (14) bearing a flexible portion (12) intended to receive the hand of an operator, said glove change device (22) comprising a body (24) intended to receive a new glove (110) and a mechanism able to apply a thrust force on the new glove (110) in such a way as to provoke its setting into place in the glove port (4) in place of a used glove (10), said device being **characterized by** a RFID reader (34) provided with at least one antenna intended to communicate with RFID chips (28, 32, 132) carried by the gloves (10, 110) and by the box ring (8) of the glove box, an electronic board (36) connected to the RFID reader (34) for storing the information received from said RFID chips (28, 32, 132).

2. Glove change device according to claim 1, comprising as many antennas as RFID chips with which it is intended to communicate.

3. Glove change device according to claim 1 or 2, comprising an anti-collision mechanism allowing for communication with said chips in a successive manner.

4. Glove change device according to one of claims 1 to 3, comprising means of detecting (27) the presence or the absence of a new glove (110) mounted in its body (24), for example said means for detecting (27) comprising a mobile element of which the position is sensitive to the presence or to the absence of a new glove and an electric switch that sends a signal to the electronic board (36) according to the position of the mobile element.

5. Glove change device according to one of claims 1 to 4, wherein the electronic board (36) comprises means able to emit alarm and/or control signals according to the information received from said RFID chips (28, 32, 132), the alarm signals being for example audible and/or visual.

6. Glove change device according to one of claims 1 to 5, comprising mechanical means able to prevent the glove change, said means being activated by a control signal emitted by said electronic board.

7. Glove box configured to isolate a volume in relation to an external environment comprising walls delimiting a closed box, at least one glove port (4) carried out in one (6) of the walls, said glove port (4) comprising a box ring (8) integral with the wall (6) and delimiting a passage wherein a device is intended to be sealingly mounted, said glove box being **characterized in that** the box ring (8) is provided with a first radiofrequency identification chip (28), said RFID chip, intended to communicate with the RFID reader (34) carried by the glove change device (22) according to one of claims 1 to 8, said RFID chip (28) comprising information on said box ring.

8. Glove box according to claim 7, comprising an immobilization ring (18) mounted on the box ring (8) and on the device housed in said box in order to immobilize the device in relation to said box ring, (8) said immobilization ring (18) comprising a second RFID chip (30), intended to communicate with the RFID reader (34), said second RFID chip (30) comprising information on said immobilization ring (18).

9. Device configured to be set into place in a glove port (4) of a glove box according to claim 7 or 8, and to sealingly close off the passage of the box ring (8), said device comprising a ring (14) sealingly cooperating with the box ring (8), a seal (16) being provided on the external periphery of the device ring (14), said device being **characterized in that** the ring comprises a third RFID chip (32) intended to communicate with an RFID reader (34), said third RFID chip (32) comprising information on said device.

10. Device configured to be put into place in a glove port of a glove box according to claim 9, said device being a glove, and said ring (14) of said device being a glove ring bearing a flexible portion (12) intended to receive the hand of an operator or the ring being closed off in such a way as to form a plug.

11. Installation comprising at least one glove box (2) according to claim 7 or 8, a glove change device (22) according to one of claims 1 to 6, at least two gloves (10, 110) according to claim 10, a glove (10) being in place in a glove port (4), referred to as used glove, said glove box (2) and a glove (110), referred to as new glove, configured to be put into place in the glove change device (22) for the purposes of replacing the used glove (10), a computer (46) intended to gather and process the information read by the RFID reader (34) and temporarily stored in the electronic board (36) and means for connecting between the computer (46) and the electronic board (36).

12. Installation as claimed in the preceding claim, comprising at least one fourth RFID chip (42) for identifying an operator, said fourth RFID chip (42) comprising information on the authorization of the operator to perform a glove change operation, and intended to be worn by the operator.

13. Installation according to claim 11 or 12, wherein the RFID chips (28, 32, 132, 30) are overmolded in the cell ring (8), and/or the glove ring (14) and/or the immobilization ring (18) or/and the RFID chips are attached (28, 32, 132, 30) onto the cell ring (8), and/or the glove ring (14) and /or the immobilization ring (18), for example by gluing.

14. Installation according to one of claims 12 to 13, wherein the data stored in said chips (28, 32, 132, 30) is the serial number of the glove mounted on each cell ring (8), the model of the glove (10, 110) or of the plug closing off the cell ring (8) in the place of a glove, the expiration date of the immobilization ring (18), the date of replacement of said glove (10, 110), the name or the number of the operator.

15. Glove change method in an installation according to one of claims 11 to 15, comprising the steps:
a) setting up the glove change device in the vicinity of the glove port of which the glove is to be changed, and reading by the RFID reader of at least the first RFID chip of the box ring and of at least the third RFID chip of the glove ring of the used glove,
b) putting in place of the new glove in the glove change device and reading the third RFID chip of the new glove by the RFID reader,
c) positioning of the glove change device on the box ring, with possibly another reading of the first RFID chip of the box ring,
d) actuating of the glove change mechanism,
e) withdrawing of the glove change device,
f) transferring data to the computer.

16. Glove change method according to claim 15, wherein the glove box comprises an immobilization ring, the step a) further comprises the reading of the second RFID chip of the immobilization ring by the RFID reader and a step of retracting the immobilization ring prior to the step b).

17. Glove change method according to claim 16, comprising a step after the step e) of reading chips of the box ring and of the glove, the glove change method advantageously comprising a step e1) of putting back in place an immobilization ring on the glove port after the step e) and of reading the second chip of said immobilization ring by the RFID reader.

18. Glove change method according to one of claims 15 to 17, comprising a step prior to the step a) of reading the fourth RFID chip for identifying the operator.

19. Glove change method according to one of claims 15 to 18, comprising following the readings of the information of the RFID chip or chips by the RFID reader, a step of processing the data by the electronic board and a step of emitting an alarm signal and/or a control signal in case of reading predetermined data.

20. Glove change method according to claim 19, wherein the data processing by the electronic board compares the data read by the RFID reader with a list of authorized or prohibited data, for example for the data that identifies the operator or the serial number of a glove and/or compares the date of the changing of the glove or date of expiration of the immobilization ring on the current date.
